# NEUE EUROPÄISCHE PATENTSCHRIFT

(11) **EP 0 655 039 B2**
(45) Veröffentlichungstag und Bekanntmachung des Hinweises auf die Entscheidung über den Einspruch: **27.11.2002**
(45) Hinweis auf die Patenterteilung: 26.03.1997
(21) Anmeldenummer: 93914712.0
(22) Anmeldetag: 24.06.1993
(51) Int. Cl.: B60T 13/57

(54) **UNTERDRUCKBREMSKRAFTVERSTÄRKER FÜR KRAFTFAHRZEUGE**
VACUUM-BRAKE BRAKING-FORCE AMPLIFIER FOR MOTOR VEHICLES
AMPLIFICATEUR DE FORCE DE FREINAGE DE FREINS A DEPRESSION POUR VEHICULES AUTOMOBILES

(30) Priorität: 22.08.1992 DE 4227879
(43) Veröffentlichungstag der Anmeldung: 31.05.1995
(73) Patentinhaber: Continental Teves AG & Co. oHG, 60488 Frankfurt (DE)
(72) Erfinder: BAUER, Jürgen, D-65187 Wiesbaden (DE)
(74) Vertreter: Portwich, Peter
(86) Internationale Anmeldenummer: EP9301612
(87) Internationale Veröffentlichungsnummer: WO94004403

(56) Entgegenhaltungen:
- EP-A- 0 218 510
- EP-B1- 0 509 866
- EP-B1- 0 509 867
- DE-A- 2 612 680
- DE-A- 2 645 506
- FR-A- 2 068 596
- FR-A- 2 360 453
- GB-A- 2 148 427
- GB-A- 2 231 377

## Beschreibung

Die Erfindung betrifft einen Unterdruckbremskraftverstärker für Kraftfahrzeuge mit einem Verstärkergehäuse, dessen Innenraum durch eine bewegliche Wand in eine Unterdruckkammer und eine Arbeitskammer unterteilt ist, sowie einem eine auf die bewegliche Wand einwirkende Druckdifferenz steuernden Steuerventil, das aus zwei konzentrisch zueinander angeordneten Dichtsitzen sowie einem elastisch verformbaren Ventilkörper besteht.

Ein derartiger Unterdruckbremskraftverstärker ist z.B. aus der DE-OS 39 15 219 bekannt. Um im Betrieb eine Vergößerung der mit der pneumatischen Druckdifferenz beaufschlagten Wirkfläche am Ventilkörper durch Aufblähen zu verhindern ist ein den Ventilkörper umgreifendes ringförmiges Teil vorgesehen, das die radiale Beweglichkeit der Rollfalte des Ventilkörpers nach außen begrenzt.

Als nachteilig wird die Wirkung einer beim Evakuieren der Unterdruckkammer aufgrund der Druckdifferenz zwischen Unterdruck und Atmosphärendruck auf die am Ventilkörper ausgebildete, oben erwähnte Wirkfläche empfunden, die in der Betätigungsrichtung wirkt und versucht, den am Steuergehäuse ausgebildeten Dichtsitz (Unterdruckdichtsitz) zu schließen. Diese Kraftkomponente muß insbesondere während des Rücklaufs der beweglichen Wand überwunden werden, um den Unterdruckdichtsitz zu öffnen, so daß die den zweiten (Atmosphären-) Dichtsitz entgegen der Betätigungsrichtung vorspannende Feder entsprechend auszulegen ist. Diese Maßnahme hat jedoch eine Erhöhung der Ansprechkraft zur Folge.

Es ist daher Aufgabe der vorliegenden Erfindung, Maßnahmen vorzuschlagen, die eine Verbesserung bzw. eine Optimierung des Verhältnisses zwischen der auf den zweiten Dichtsitz einwirkenden Rückstellkraft und der Ansprechkraft des Unterdruckbremskraftverstärkers ermöglichen.

Diese Aufgabe wird erfindungsgemäß durch die Merkmale des unabhängigen Anspruchs 1 gelöst.

Die bei einer Bewegung des Ventilkörpers auftretende Reibung kann bei einer anderen vorteilhaften Weiterbildung der Erfindung dadurch minimiert werden, daß der Ventilkörper eine radial außen- sowie eine radial innenliegende Rollfalte aufweist, die zusammen mit einem den Ventilkörper im Steuergehäuse haltenden Haltering den pneumatischen Raum begrenzen.

Eine Verkürzung der axialen Baulänge bei einfacher Montierbarkeit bzw. Herstellbarkeit wird bei einer anderen Ausführung des erfindungsgemäßen Unterdruckbremskraftverstärkers dadurch erreicht, daß der Ventilkörper ringförmig ausgebildet ist und eine radial außensowie eine radial innenliegende Dichtlippe aufweist, die zusammen mit einem im Steuergehäuse abgedichtet angeordneten Führungsteil den pneumatischen Raum begrenzen.

Dabei ist es von Vorteil, wenn auf der den Dichtsitzen abgewandten Seite des Ventilkörpers ein ringförmiges Versteifungselement angeordnet ist, an dem eine den Ventilkörper in Richtung auf die Dichtsitze zu vorspannende Ventilfeder abgestützt ist. Das Versteifungselement ist im Querschnitt vorzugsweise U-förmig ausgebildet und weist mindestens eine dem Durchlaß des Ventilkörpers gegenüberliegende Öffnung auf.

Eine erhebliche Erleichterung der Montage der Steuergruppe ergibt sich bei einer weiteren Ausführungsvariante, wenn das Versteifungselement zwischen den Rollfalten angeordnet ist. Dadurch wird außerdem eine einwandfreie Abstützung der radial innenliegenden Rollfalte gewährleistet, die eine Realisierung eines bestimmten gewünschten Abrolldurchmessers ermöglicht. Das Versteifungselement kann dabei im Querschnitt auch L-förmig ausgebildet sein.

Ein weitere vorteilhafte Ausführungsvariante der Erfindung zeichnet sich dadurch aus, daß die Abdichtung des pneumatischen Raumes mittels je eines an die außen- bzw. innenliegende Rollfalte anschließenden Dichtwulstes erfolgt, der am Steuergehäuse bzw. dem Haltering dichtend anliegt. Durch diese wirksame Abdichtung wird eine Erhöhung der Betriebssicherheit des erfindungsgemäßen Unterdruckbremskraftverstärkers erreicht.

Für die gewünschten Werte der von der vorhin erwähnten Feder aufzubringenden Rückstellkraft ist es schließlich von großer Bedeutung, wenn der Durchmesser der radial innenliegenden Rollfalte kleiner als der Durchmesser des zweiten Dichtsitzes ist, bzw. höchstens diesem Durchmesser entspricht.

Die Erfindung wird im nachfolgenden Text anhand zweier Ausführungsbeispiele im Zusammenhang mit der beigefügten Zeichnung näher erläutert. In der Zeichnung zeigen:
- Fig. 1: einen Unterdruckbremskraftverstärker nach der Erfindung im Längsschnitt, teilweise weggebrochen;
- Fig. 2: den bei dem Unterdruckbremskraftverstärker
- und Fig. 3: nach Fig. 1 verwendeten Ventilkörper in Draufsicht bzw. Seitenansicht in axialer Schnittdarstellung in vergrößertem Maßstab und
- Fig. 4: die Steuergruppe einer zweiten Ausführung des erfindugsgemäßen Unterdruckbremskraftverstärkers im vergrößerten Maßstab, stark vereinfacht.

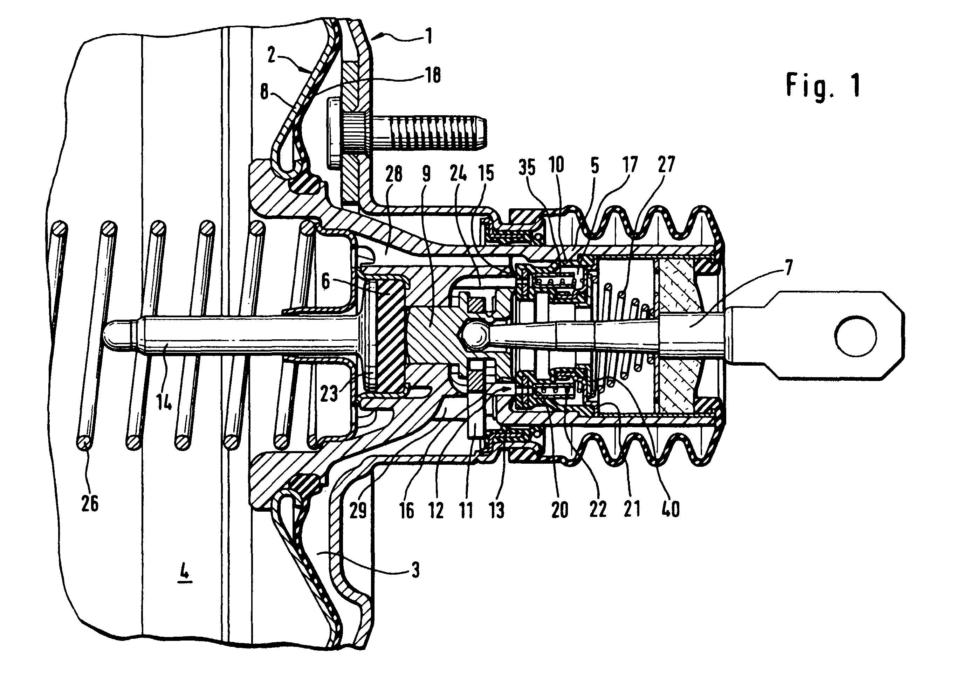

Das lediglich schematisch angedeutete Verstärkergehäuse 1 des in Fig. 1 gezeigten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der am unterdruckseitigen Ende des Unterdruckbremskraftverstärkers angebracht ist. Die an der Betätigungsstange 7 eingeleitete Eingangskraft wird auf die Reaktionsscheibe 6 mittels des Ventilkolbens 9 übertragen.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine zweite Druckfeder 27 vorgesehen, die zwischen der Betätigungsstange 7 und einem am Haltering 21 anliegenden, den Ventilkörper 10 am Haltering 21 sichernden Abstützring 40 angeordnet ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem das Steuergehäuse 5 im Verstärkergehäuse 1 abgedichtet führenden Gleitdichtring 13 anliegt.

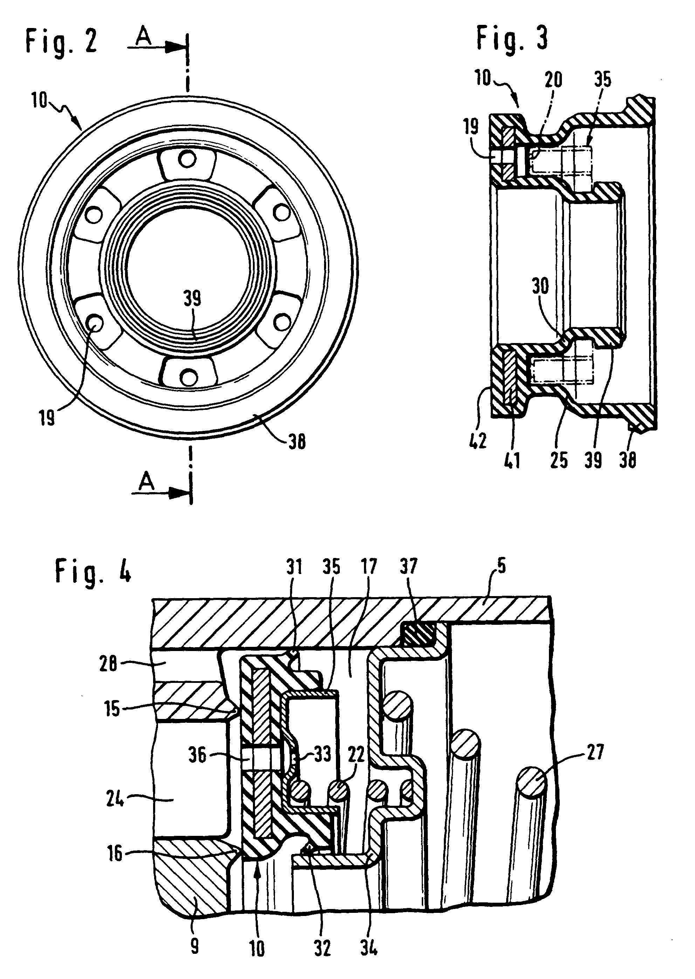

Wie insbesondere Fig. 2 und 3 zeigen, weist der Ventilkörper 10 eine mit den beiden Dichtsitzen 15,16 zusammenwirkende ringförmige Dichtfläche 42 auf, die mittels einer metallischen Versteifungsscheibe 41 versteift ist und mit mehreren axialen Durchlässen 19 versehen ist. An die den Dichtsitzen 15,16 abgewandte Seite der Dichtfläche 42 schließen eine radial außenliegende erste Rollfalte 25 größeren Durchmessers sowie eine radial innenliegende zweite Rollfalte 30 kleineren Durchmessers an, die in je einen Dichtwulst 38,39 übergehen, die im montierten Zustand des Ventilkörpers 10 im Steuergehäuse 5 an dessen Innenwand bzw. dem vorhin erwähnten, den Ventilkörper 10 haltenden Haltering 21 dichtend anliegen, so daß im Steuergehäuse 5 ein pneumatischer Raum 17 begrenzt ist. Zwischen den beiden Rollfalten 25,30 ist dabei vorzugsweise ein im Querschnitt U-förmig ausgebildetes, ringförmiges Versteifungselement 35 angeordnet, an dem die Ventilfeder 22 abgestützt ist und das mehrere, den Durchlässen 19 des Ventilkörpers 10 gegenüberliegend ausgebildete Öffnungen 20 aufweist. Die durch die Durchlässe 19 und die Öffnungen 20 gebildeten, näher nicht bezeichneten Strömungskanäle verbinden den pneumatischen Raum 17 mit einem durch die Dichtsitze 15,16 begrenzten Ringraum 24, in dem der oben erwähnte pneumatische Kanal 29 mündet, so daß der auf der der Dichtfläche 42 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Bei dem in Fig. 4 gezeigten zweiten Ausführungsbeispiel ist der Ventilkörper 10 ringförmig ausgebildet und weist eine radiale außenliegende, an der Wandung des Steuergehäuses 5 dichtend anliegende erste Dichtlippe 31 sowie eine radial innenliegende zweite Dichtlippe 32 auf, die mit einem den pneumatischen (Druckausgleichs-) Raum 17 begrenzenden Führungsteil 34 zusammenwirkt. Das gegenüber dem Steuergehäuse 5 mittels eines O-Ringes 37 abgedichtete Führungsteil 34 dient einerseits der Abstützung der Kolbenstangenrückholfeder 27 und andererseits der Abstützung der Ventilfeder 22. Für die Verbindung zwischen dem Druckausgleichsraum 17 und dem Ringraum 24 bzw. der nicht gezeigten Arbeitskammer 3 sorgen ähnlich wie bei der Ausführung nach Fig. 1 bis 3 Durchlässe 36 im Ventilkörper 10 sowie Öffnungen 33, die in einem den Ventilkörper 10 versteifenden, im Querschnitt U-förmig gestalteten Versteifungsring 35 den Durchlässen 36 gegenüberliegend ausgebildet sind. Der Durchmesser der radial innenliegenden Dichtlippe 32 liegt in der gleichen Größenordnung wie der des zweiten Dichtsitzes 16.

In der in Fig. 4 gezeigten Lösestellung herrscht im Unterdruckkanal 28, dem Ringraum 24 sowie dem pneumatischen Druckausgleichsraum 17 annähernd der gleiche Druck. Dadurch ist der Ventilkörper 10 pneumatisch kraftausgeglichen. Die Ventilfeder 22 erbringt die benötigte Anpreßkraft des Ventilkörpers 10 an den zweiten Dichtsitz 16.

Bei der Betätigung ergeben die Ventilfeder 22 und die aufgrund der auf die durch die erste Dichtlippe 31 und den ersten Dichtsitz 15 begrenzte Ringfläche wirkenden pneumatischen Druckdifferenz entstehende Kraftkomponente die erforderliche Anpreßkraft des Ventilkörpers 10 an den ersten Dichtsitz 15.

Um bei einem Rücklauf der beweglichen Wand 2 eine Verbindung zwischen den pneumatischen Kammern 3,4 herzustellen bzw. ein Öffnen des ersten (Unterdruck-) Dichtsitzes 15 zu erreichen, arbeitet die zweite (Kolbenstangenrückhol-) Feder 27 gegen die Federkraft der Ventilfeder 22 und den auf den zweiten Dichtsitz 16 einwirkenden Atmosphärendruck. Der Überschuß der von ihr aufzubringenden Kraft stellt die vorhin erwähnte Rückstellkraft dar.

Die vorliegende Erfindung ermöglicht demnach eine Verringerung der Differenz zwischen der Ansprechkraft des Unterdruckbremskraftverstärkers und der am Ventilkolben wirkenden Rückstellkraft in dem Sinne, daß bei einer gleichbleibenden Ansprechkraft eine Erhöhrung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

### Bezugszeichenliste:

- 1: Verstärkungsgehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 11: Querglied
- 12: Steuerventil
- 13: Gleitdichtring
- 14: Druckstange
- 15: Dichtsitze
- 16: Dichtsitze
- 17: Raum
- 18: Rollmembran
- 19: Durchlaß
- 20: Öffnung
- 21: Haltering
- 22: Ventilfeder
- 23: Kopfflansch
- 24: Ringraum
- 25: Rollfalte
- 26: Rückstellfeder
- 27: Kolbenstangenrückholfeder
- 28: Kanal
- 29: Kanal
- 30: Rollfalte
- 31: Dichtlippe
- 32: Dichtlippe
- 33: Öffnung
- 34: Führungsteil
- 35: Versteifungselement
- 36: Durchlaß
- 37: O-Ring
- 38: Dichtwulst
- 39: Dichtwulst
- 40: Abstützring
- 41: Versteifungsscheibe
- 42: Dichtfläche

## Patentansprüche

1. Unterdruckbremskraftverstärker für Kraftfahrzeuge, mit einem Verstärkergehäuse (1), dessen Innenraum durch eine bewegliche Wand (2) in eine Unterdruckkammer (4) und eine Arbeitskammer (3) unterteilt ist, sowie einem eine auf die bewegliche Wand (2) einwirkende Druckdifferenz steuernden, in einem die bewegliche Wand (2) tragenden Steuergehäuse (5) angeordneten Steuerventil (12), das aus zwei konzentrisch zueinander angeordneten Dichtsitzen (15,16) sowie einem elastisch verformbaren Ventilkörper (10) besteht, **dadurch gekennzeichnet, daß** der Ventilkörper (10) im Steuergehäuse (5) einen pneumatischen Raum (17) begrenzt, der auf der einer mit den Dichtsitzen (15, 16) zusammen werkenden Dichtflache (42) des Ventilkörpers (10) abgewandten Seite des Ventilkörpers (10) ausgebildet ist und mit dem in der Arbeitskammer (3) herrschenden pneumatischen Druck beaufschlagbar ist und daß die Verbindung zwischen dem pneumatischen Raum (17) und der Arbeitskammer (3) mittels mindestens eines Durchlasses (19) erfolgt, der im Bereich der Dichtfläche(42) des Ventilkörpers (10) ausgebildet ist.

2. Unterdruckbremskraftverstärker nach Anspruch 1 **dadurch gekennzeichnet, daß** der bzw. die Durchlässe (19) eine Verbindung zwischen einem durch die Dichtsitze (15,16) begrenzten, mit der Arbeitskammer (3) verbundenen Ringraum (24) und dem pneumatischen Raum (17) bildet.

3. Unterdruckbremskraftverstärker nach Anspruch 1 oder 2 **dadurch gekennzeichnet, daß** das Steuerventil (12) im Steuergehäuse (5) in einem Bereich angeordnet ist, der durch einen das Steuergehäuse (5) im Verstärkergehäuse (1) abgedichtet führenden Gleitdichtring (13) radial begrenzt ist.

4. Unterdruckbremskraftverstärker nach einem der Ansprüche 1 bis 3, **dadurch gekennzeichnet, daß** der Ventilkörper (10) eine radial außen- sowie eine radial innenliegende Rollfalte (25,30) aufweist, die zusammen mit seiner Dichtfläche (42) sowie einem den Ventilkörper (10) im Steuergehäuse (5) haltenden Haltering (21) den pneumatischen Raum (17) begrenzen.

5. Unterdruckbremskraftverstärker nach einem der Ansprüche 1 bis 3, **dadurch gekennzeichnet, daß** der Ventilkörper (10) ringförmig ausgebildet ist und eine radial außensowie eine radial innenliegende Dichtlippe (31,32) aufweist, die zusammen mit seiner Dichtfläche sowie einem im Steuergehäuse (5) abgedichtet angeordneten Führungsteil (34) den pneumatischen Raum (17) begrenzen.

6. Unterdruckbremskraftverstärker nach Anspruch 4 oder 5, **dadurch gekennzeichnet, daß** auf der den Dichtsitzen (15,16) abgewandten Seite des Ventilkörpers (10) ein ringförmiges Versteifungselement (35) angeordnet ist, an dem eine den Ventilkörper (10) in Richtung auf die Dichtsitze (15,16) zu vorspannende Ventilfeder (22) abgestützt ist.

7. Unterdruckbremskraftverstärker nach Anspruch 6, **dadurch gekennzeichnet, daß** das Versteifungselement (35) im Querschnitt U-förmig ausgebildet ist und mindestens eine dem Durchlaß (19 bzw. 36). des Ventilkörpers (10) gegenüberliegende Öffnung (20 bzw. 33) aufweist.

8. Unterdruckbremskraftverstärker nach Anspruch 4, 6 und 7, **dadurch gekennzeichnet, daß** das ringförmige Versteifungselement (35) zwischen den Rollfalten (25,30) angeordnet ist.

9. Unterdruckbremskraftverstärker nach Anspruch 8, **dadurch gekennzeichnet, daß** das Versteifungselement (35) im Querschnitt L-förmig ausgebildet ist.

10. Unterdruckbremskraftverstärker nach Anspruch 4 oder 8, **dadurch gekennzeichnet, daß** die Andichtung des pneumatischen Raumes (17) mittels je eines an die außen- bzw. innenliegende Rollfalte (25 bzw. 30) anschließenden Dichtwulstes (38,39) erfolgt, der am Steuergehäuse (5) bzw. dem Haltering (21) dichtend anliegt.

11. Unterdruckbremskraftverstärker nach einem der vorhergehenden Ansprüche 4 oder 8 bis 10, **dadurch gekennzeichnet, daß** der Durchmesser der radial innenliegenden Rollfalte (30) kleiner als der Durchmesser des zweiten Dichtsitzes (16) ist, bzw. höchstens diesem Durchmesser entspricht.

12. Unterdruckbremskraftverstärker nach einem der vorhergehenden Ansprüche 2 bis 11 **dadurch gekennzeichnet, daß** die Verbindung der Arbeitskammer (3) mit der Atmosphäre bei der Betätigung des Steuerventils (12) mittels eines pneumatischen Kanals (29) erfolgt, der im Ringraum (24) mündet.

13. Unterdruckbremskraftverstärker nach Anspruch 12, **dadurch gekennzeichnet, daß** der Kanal (29) in der Betätigungsrichtung hinter dem Steuerventil (12) im Steuergehäuse (5) annähernd radial verlaufend ausgebildet ist.

## Claims

1. A vacuum brake power booster for automotive vehicles including a booster housing (1) having its interior subdivided by a movable wall (2) into a vacuum chamber (4) and a working chamber (3), as well as a control valve (12) which controls a pressure differential acting on the movable wall (2) and is arranged in a control housing (5) that carries the movable wall (2), said control valve comprising two concentrically arranged sealing seats (15,16) and an elastically deformable valve member (10),
**characterized in that** the valve member (10) confines a pneumatic chamber (17) in the control housing (5), said chamber being arranged on the side of the valve member (10) remote from a sealing surface (42) of the valve member (10) that cooperates with the sealing seats (15, 16), and said chamber being adapted to be acted upon by the pneumatic pressure prevailing in the working chamber (3), and **in that** the connection between the pneumatic chamber (17) and the working chamber (3) is provided by at least one passage (19) arranged proximate the sealing surface (42) of the valve member (10).

2. A vacuum brake power booster as claimed in claim 1,
**characterized in that** the passage(s) (19 provide(s) a connection between an annular chamber (24), confined by the sealing seats (15, 16) and connected to the working chamber (3), and the pneumatic chamber (17).

3. A vacuum brake power booster as claimed in claim 1 or claim 2,
**characterized in that** the control valve (12) in the control housing (5) is arranged in an area which is radially bounded by a sliding packing ring (13) which guides and seals the control housing (5) in the booster housing (1).

4. A vacuum brake power booster as claimed in any one of claims 1 to 3,
**characterized in that** the valve member (10) has a radially external and a radially internal rolling fold (25, 30) which, along with its sealing surface (42) and a retaining ring (21) retaining the valve member (10) in the control housing (5), confine the pneumatic chamber (17).

5. A vacuum brake power booster as claimed in any one of claims 1 to 3,
**characterized in that** the valve member (10) has an annular shape and a radially external and a radially internal sealing lip (31, 32) which, along with its sealing surface and a guide element (34) arranged and sealed in the control housing (5), confine the pneumatic chamber (17).

6. A vacuum brake power booster as claimed in claim 4 or claim 5,
**characterized in that** an annular reinforcing element (35) is arranged on the side of the valve member (10) remote from the sealing seats (15, 16), and a valve spring (22) bears against the reinforcing element (35) and biasses the valve member (10) in the direction of the sealing seats (15, 16).

7. A vacuum brake power booster as claimed in claim 6,
**characterized in that** the reinforcing element (35) has a U-shaped cross-section and includes at least one opening (20 or 33, respectively) opposite to the passage (19 or 36, respectively) of the valve member (10).

8. A vacuum brake power booster as claimed in claims 4, 6 and 7,
**characterized in that** the annular reinforcing element (35) is positioned between the rolling folds (25, 30).

9. A vacuum brake power booster as claimed in claim 8,
**characterized in that** the reinforcing element (35) has an L-shaped cross-section.

10. A vacuum brake power booster as claimed in claim 4 or claim 8,
**characterized in that** the pneumatic chamber (17) is sealed by sealing beads (38, 39), which are respectively adjacent to the external and the internal rolling folds (25 and 30) and in sealing abutment on the control housing (5) or the retaining ring (21), respectively.

11. A vacuum brake power booster as claimed in any one of the preceding claims 4 or 8 to 10,
**characterized in that** the diameter of the radially internal rolling fold (30) is smaller than the diameter of the second sealing seat (16), or that it is at most as large as the diameter of the second sealing seat.

12. A vacuum brake power booster as claimed in any one of the preceding claims 2 to 11,
**characterized in that**, when the control valve (12) is actuated, the working chamber (3) is connected to the atmosphere by way of a pneumatic channel (29) which terminates into the annular chamber (24).

13. A vacuum brake power booster as claimed in claim 12,
**characterized in that** the channel (29) extends roughly radially in the control housing (5) in the actuating direction behind the control valve (12).

## Revendications

1. Amplificateur de force de freinage à dépression, pour véhicule automobile, comprenant un boîtier d'amplificateur (1), dont la cavité est divisée au moyen d'une paroi mobile (2) en une chambre à dépression (4) et une chambre de travail (3), et une valve de commande (12) qui est disposée dans un boîtier de commande (5) portant la paroi mobile (2) et commande une différence de pression agissant sur la paroi mobile (2) et qui est constituée de deux sièges d'étanchéité (15, 16), disposés d'une manière concentrique l'un vis-à-vis de l'autre, et d'un obturateur (10) déformable élastiquement, **caractérisé en ce que** l'obturateur (10) délimite, dans le boîtier de commande (5), une chambre pneumatique (17) qui est formée sur le côté de l'obturateur (10) opposé d'une surface d'étanchéité (42) de l'obturateur (10) coopérant avec les sièges d'étanchéité (15, 16), la chambre pneumatique (17) pouvant être soumise à la pression pneumatique régnant dans la chambre de travail (3) et **en ce que** la communication entre la chambre pneumatique (17) et la chambre de travail (3) est réalisée au- moyen d'au moins un passage (19) qui est ménagé dans la zone de la surface d'étanchéité (42) de l'obturateur (10).

2. Amplificateur de force de freinage à dépression selon la revendication 1, **caractérisé en ce que** le ou les passages (19) offrent une communication entre une chambre annulaire (24), délimitée par les sièges d'étanchéité (15, 16) et communiquant avec la chambre de travail (3), et la chambre pneumatique (17).

3. Amplificateur de force de freinage à dépression selon la revendication 1 ou 2, **caractérisé en ce que** la valve de commande (12) est disposée dans le boîtier de commande (5) dans une zone qui est délimitée radialement par une bague d'étanchéité de glissement (13) qui guide le boîtier de commande (5) d'une manière étanche dans le boîtier d'amplificateur (1).

4. Amplificateur de force de freinage à dépression selon l'une des revendications 1 à 3, **caractérisé en ce que** l'obturateur (10) comporte un partie sinueuse de déroulement située radialement à l'extérieur et un partie sinueuse de déroulement située radialement à l'intérieur (25, 30) qui délimitent la chambre pneumatique (17) avec la surface d'étanchéité (42) de l'obturateur et avec un anneau de maintien (21) qui retient l'obturateur (10) dans le boîtier de commande (5).

5. Amplificateur de force de freinage à dépression selon l'une des revendications 1 à 3, **caractérisé en ce que** l'obturateur (10) est réalisé avec une forme annulaire et comporte une lèvre d'étanchéité située radialement à l'extérieur et une lèvre d'étanchéité située radialement à l'intérieur (31, 32) qui délimitent la chambre pneumatique (17) avec la surface d'étanchéité de l'obturateur et avec une pièce de guidage (34) qui est disposée d'une manière étanche dans le boîtier de commande (5).

6. Amplificateur de force de freinage à dépression selon la revendication 4 ou 5, **caractérisé en ce qu'**il est prévu, disposé sur la face de l'obturateur (10) qui est située à l'opposé des siège d'étanchéité (15, 16), un élément annulaire de raidissement (35) sur lequel prend appui un ressort de valve (22) devant appliquer une précontrainte sur l'obturateur (10) en direction des sièges d'étanchéité (15, 16).

7. Amplificateur de force de freinage à dépression selon la revendication 6, **caractérisé en ce que** l'élément de raidissement (35) est réalisé en forme de U en section transversale et comporte au moins un orifice (20 ou 33) situé en regard du passage (19 ou 36) de l'obturateur (10).

8. Amplificateur de force de freinage à dépression selon la revendication 4, 6 et 7, **caractérisé en ce que** l'élément annulaire de raidissement (35) est disposé entre les parties sinueuses de déroulement (25, 30).

9. Amplificateur de force de freinage à dépression selon la revendication 8, **caractérisé en ce que** l'élément de raidissement (35) est réalisé en forme de L en section transversale.

10. Amplificateur de force de freinage à dépression selon la revendication 4 ou 8, **caractérisé en ce que** l'étanchéité de la chambre pneumatique (17) est réalisée, pour chacune des parties sinueuses de déroulement située à l'extérieur et située à l'intérieur (25 et 30), au moyen de bourrelets d'étanchéité (38, 39) qui se raccordent respectivement à ces partise sinueuses extérieure ou intérieure et qui s'appliquent d'une manière étanche respectivement sur le boîtier de commande (5) et sur l'anneau de maintien (21).

11. Amplificateur de force de freinage à dépression selon l'une des revendications précédentes 4 ou 8 à 10, **caractérisé en ce que** le diamètre de la partie sinueuse de déroulement située radialement à l'intérieur (30) est inférieur au diamètre du second siège d'étanchéité (16) ou au plus égal à ce diamètre.

12. Amplificateur de force de freinage à dépression selon l'une des revendications précédentes 2 à 11, **caractérisé en ce que** la communication de la chambre de travail (3) avec l'atmosphère lors de l'actionnement de la valve de commande (12) est réalisée au moyen d'un conduit pneumatique (29) qui débouche dans la chambre annulaire (24).

13. Amplificateur de force de freinage à dépression selon la revendication 12, **caractérisé en ce que** le conduit (29) est réalisé de manière à s'étendre d'une façon pratiquement radiale dans le boîtier de commande (5), en aval de la valve de commande (12) dans le sens d'actionnement.
